# EUROPEAN PATENT APPLICATION

(11) **EP 1 975 118 A1**
(43) Date of publication of application: **01.10.2008**
(21) Application number: 08005929.8
(22) Date of filing: 28.03.2008
(51) Int. Cl.: B67C 7/00

(54) **Rotary device for supporting, clamping and locating multiple-size vessels**

(30) Priority: 28.03.2007 IT MI20070621
(71) Applicant: Tecno Fluss S.r.l., 21018 Sesto Calende (VA) (IT)
(72) Inventor: Rognoni, Francesco c/o TECNO FLUSS S.r.l, 21018 Sesio Calende (Varese) (IT); Marengo, Stefano c/o TECNO FLUSS S.r.l, 21018 Sesio Calende (Varese) (IT)
(74) Representative: Cicogna, Franco

(57) **Abstract**

A rotary device for supporting, clamping and locating or arranging multiple-size vessels (C), comprises a first substantially like star element (4,7) and second star element (5,7), each star element having a substantially fretted circumferential rim, defining a plurality of circumferential adjoining notches (6), said first and second elements being adapted to be axially overlapped and to intermittently mutually turn to define variable width recesses (11), each said recess being adapted to receive and firmly hold therein a respective variable cross size or width vessel (C).

## Description

### BACKGROUND OF THE INVENTION

The present invention relates to a rotary device for supporting, clamping and locating or arranging multiple-size vessels, in particular for application to bottling machines and the like.

As is known, conventional bottling machines comprise a conveyor belt, thereon a plurality of vessels, such as bottles and the like, are conveyed to one or more processing stations, to be subjected to desired processing operations, such as a bottling operation.

In the above mentioned prior bottling machines, the bottles are successively fed to a socalled rotary star assembly, having a generally circular configuration, defining, on a periphery thereof, a plurality of adjoining recesses, provided for receiving the individual vessels or bottles, for further handling and locating said vessels or bottles in specifically designed processing devices.

The peripheral recesses of prior star assemblies have a fixed size, thereby they are adapted to receive and hold only preset dimension vessels and/or bottles.

For processing and/or bottling different size vessels and/or bottles, it is necessary to replace the overall star assembly, which would require a comparatively long time and, moreover, to have available a plurality of star elements having different size recesses, with a self-evident cost increase both due to the dead time of the bottling machine necessary to replace the mentioned star assemblies, and to hold in a store a plurality of star assemblies having differently sized recesses to fit, as stated, vessels of different sizes.

### SUMMARY OF THE INVENTION

Thus, the aim of the present invention is to overcome the above mentioned drawbacks of the prior art, by providing a rotary device for supporting, clamping and locating vessels in general, in particular for application to bottling machines and the like, which can be easily and quickly fitted to multi-size vessels, that is having different sizes and shapes, within broad size and configurations ranges.

Within the scope of the above mentioned aim, a main object of the present invention is to provide a device of the above indicated type, which is construction-wise very simple, and can be safely and quickly fitted to any types of existing bottling machines.

Another object of the present invention is to provide such a device of the above mentioned type which comprises a very small number of operating parts, and which can be directly controlled by the control panel of the bottling machine.

Yet another object of the present invention is to provide such a device of the above indicated type, which allows to directly formulate compositions, without manual operations by the bottling machine operator, inside said bottling machine.

Yet another object of the present invention is to provide such a device of the above indicated type which allows to indifferently use a very high number of cylindric, rectangular, oval vessels, without the need of replacing the above mentioned star assemblies.

Yet another object of the present invention is to provide such a device of the above indicated type, which does not require substantially maintenance and which can be easily assembled and disassembled to/from the bottling machine.

Yet another object of the present invention is to provide such a device of the above indicated type, which can be easily made starting from easily available materials and components.

According to one aspect of the present invention, the above mentioned aim and objects, as well as yet other objects, which will become more apparent hereinafter, are achieved by a rotary device for supporting, clamping and locating multiple-size vessels, in particular for application to bottling machines and the like, having the features of claim 1.

### BRIEF DESCRIPTION OF THE DRAWINGS

Further characteristics and advantages of the device according to the present invention will become more apparent hereinafter from the following detailed disclosure of a preferred embodiment thereof, which is illustrated, by way of an indicative, but not limitative example, in the figures of the accompanying drawings, where:
Figure 1 is a schematic front view of a bottling machine the device according to the present invention has been applied to;
Figure 2 is a top plan view of the device shown in figure 1;
Figure 3 is a further top plan view of a first star element included in the device according to the present invention;
Figure 4 is yet another top plan view of a second star element, substantially equal to the star element shown in figure 3, included in the device according to the present invention;
Figure 5 is yet another top plan view showing the two star elements of figures 3 and 4, in an operating overlapped relationship;

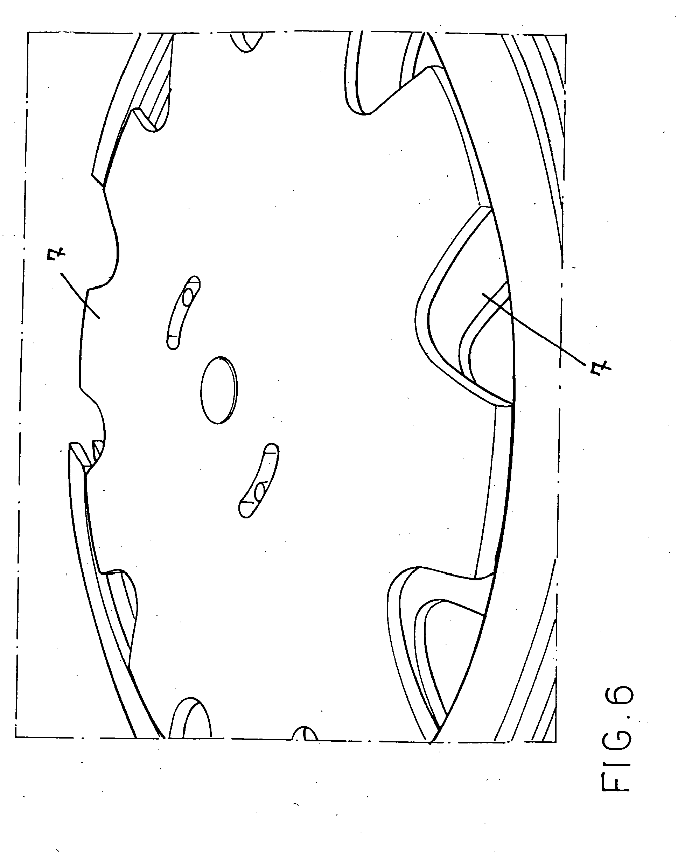

Figure 6 is a schematic partial perspective view of the device of the present invention, showing the star assembly elements in an overlapping relationship;

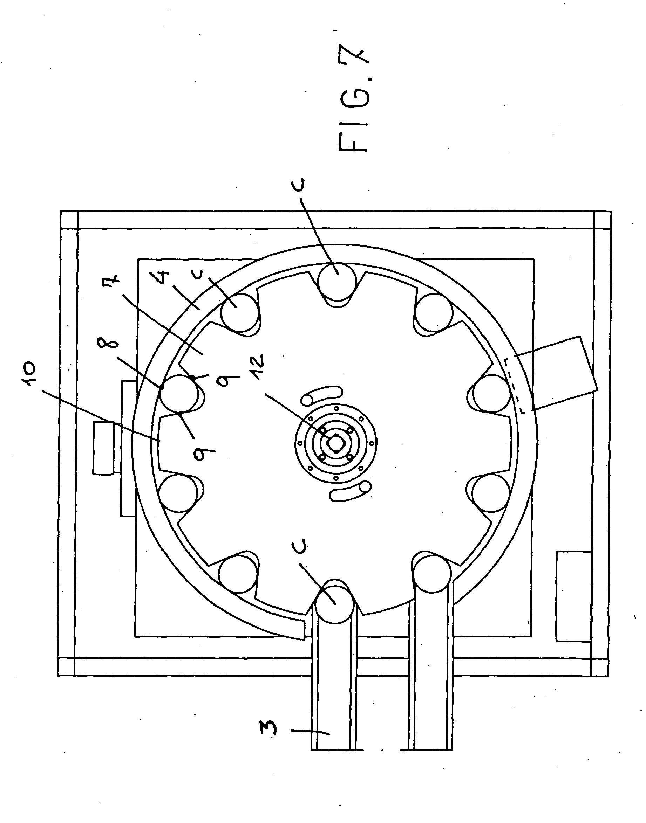

Figure 7 is a further schematic partial top plan view showing the star elements which have been perfectly overlapped to receive therein vessels, for example cylindric vessels, having a first size, or maximum size;
Figure 8 is a view analogous to figure 7, but showing the star elements mutually rotated to receive vessels having a second size, less than the maximum size;
Figures 9 and 10 are further schematic top plan views showing the manner in which the star elements of figures 7 and 8 engages and firmly lock at three points A, B and C the mentioned vessels.

### DESCRIPTION OF THE PREFERRED EMBODIMENTS

With reference to the above mentioned figures, the device according to the present invention has been generally indicated herein by the reference number 1.

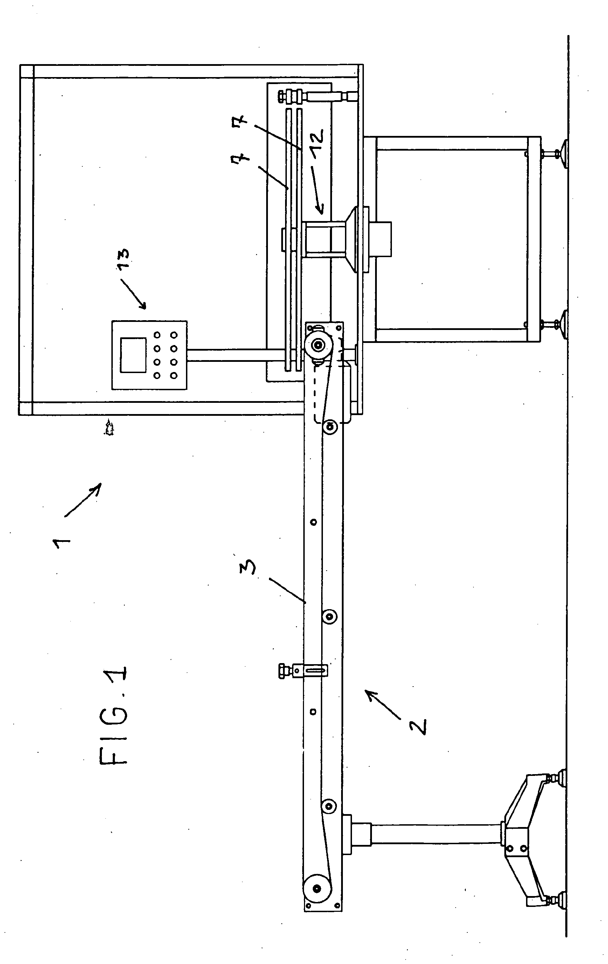

As is shown, the device 1 has been applied to a bottling machine, generally indicated by the reference number 2, of any per se known types, which comprises, as a main component thereof, a conveyor belt 3, for conveying to the device 1 of the invention a plurality of vessels and/or bottles and/or jars (not shown in figure 1) which are successively fed to the device 3 according to the invention to be arranged at corresponding further processing stations, which have not been shown in further details.

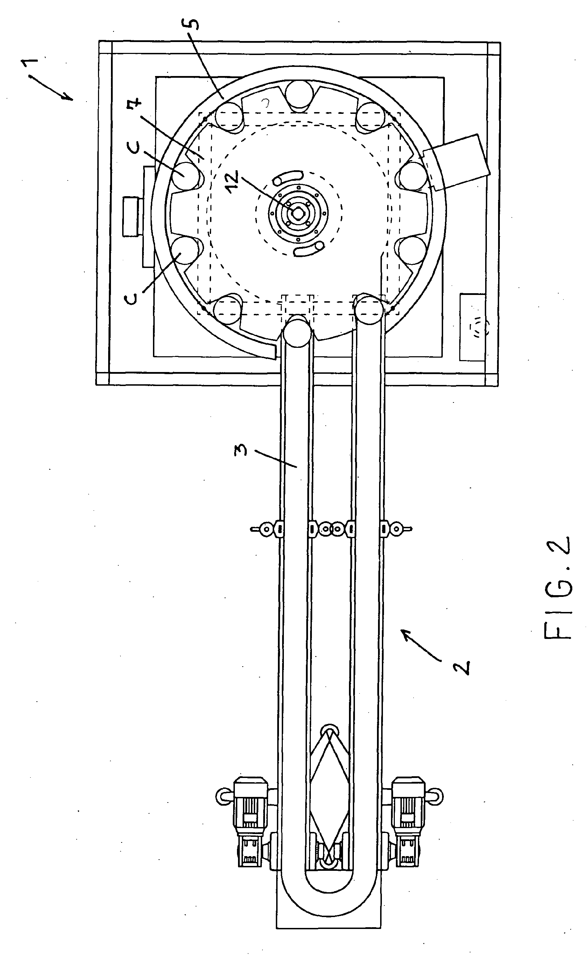

Figure 2, which is a top plan view of figure 1, shows the device 1 according to the invention with the star elements or assemblies 4 and 5 in an overlapping relationship, as it will be disclosed in a more detailed manner hereinafter, thereby defining scalloped or fretted portions, or notches 6, which define corresponding recesses for firmly holding respective vessels C (see, for example, figure 2).

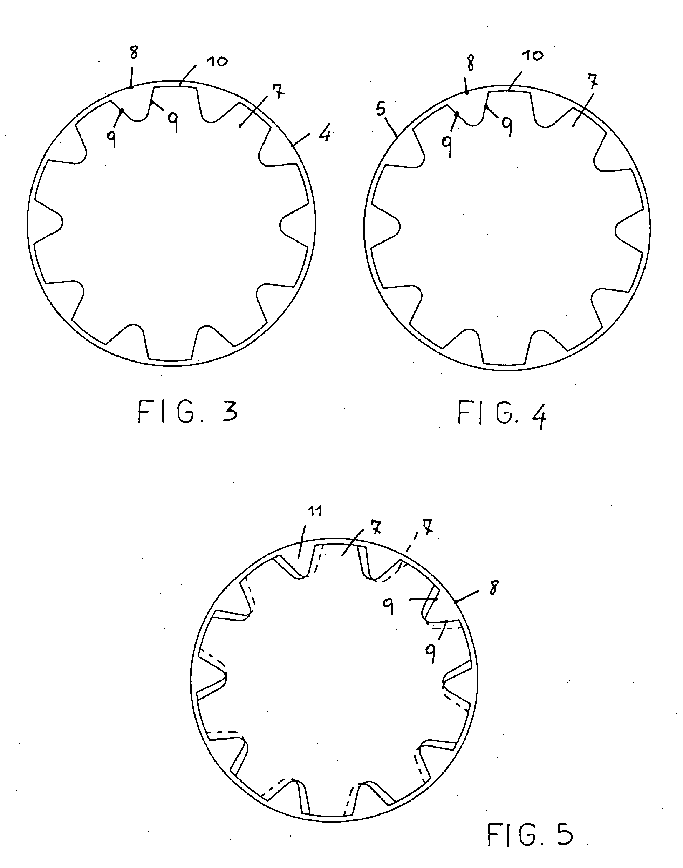

With reference to figures 3 and 4, the individual star elements 4 and 5, which, advantageously, are substantially equal to one another, will be now disclosed in a more detailed manner.

In particular, each star element 4 comprises a substantially circular configuration body 7, having a set thickness, and being, for example, molded starting from a suitable plastics material, and defining the above mentioned plurality of notches or scalloped circumferential adjoining portions 6, each notch being, in turn, defined by a bottom depression portion 8 and by walls 9.

Said bottom 8 and walls 9 are smoothly merged so as to define a respective notch having a substantially semi-sinusoidal configuration whereas, at the top end portions of said walls 9, two adjoining notches are merged by a substantially semicircular ridge portion 10.

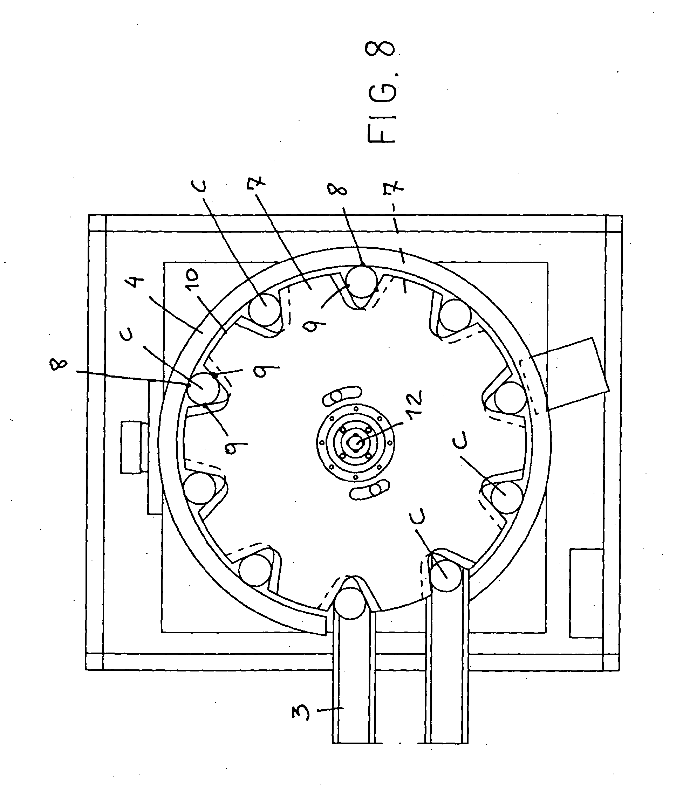

Figures 5, 8, 9, 10 show, for example, the two star elements 7 in a mutually overlapping relationship, which elements, according to an important aspect to the invention, may be mutually turned, for example in an intermitted manner, to define recesses in turn forming a receiving and firmly clamping space 11, for receiving and clamping therein a said respective vessel C.

In particular, for rotatively driving the two star elements (see for example figure 1), is herein provided an electric motor, generally indicated by the reference number 12, for example a brushless servomotor, adapted to bidirectionally rotatively move, for example in an intermittent manner, advantageously as properly controlled by the same control panel 13 which further controls the other processing stations of the bottling machine 2.

Thus, by mutually rotating the two overlapped star elements 7, for example the first star element in a clockwise direction and the second star element in an anticlockwise direction, said receiving and clamping space defined by said overlapping recess pair can be either increased or decreased.

In this connection it should be apparent that, with the recesses 6 being perfectly overlapping and coinciding, the containment space will have a maximum value, whereas with said recesses in a "mutually offset relationship", which condition may be obtained by properly rotatively driving the servomotor 12, the space defined by said recesses will be decreased to receive vessels C having a different size and configuration.

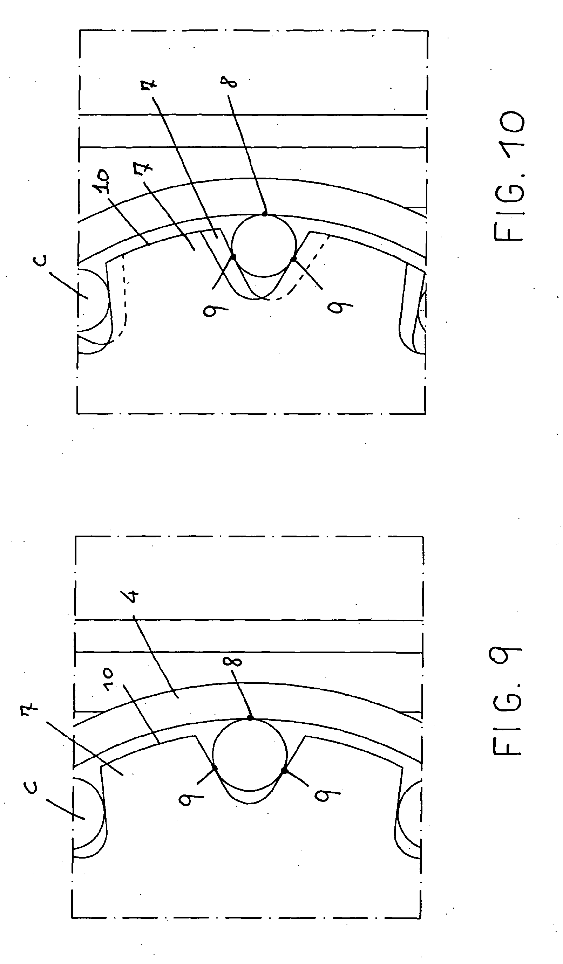

In this respect, a further important aspect of the present invention is that said vessels C will be firmly supported and clamped, since they will be contacted by the overlapping star elements 7 substantially at three points (A', B', C', see for example figure 10).

In other words, by symmetrically rotating the two like star elements 7, as arranged one above the other, it will be possible to provide the above mentioned holding and firm clamping of a vessel, for example of a circular configuration, in each recess, without modifying the outer perimeter, the rotary movement being merely obtained by controlling and/or energizing the brushless servomotor 12 directly from the panel 13 of the operator, for example, advantageously, a touch screen type of controlling panel.

Moreover, one skilled in the art will advantageously understand that, owing to the inventive system, it is also possible to directly formulate prescribed compositions, without requiring the operator to manually operate inside the machine.

Thus, the device according to the invention allows, as it would be apparent from the above disclosure, to use a very high number of cylindric, rectangular, oval vessels, without replacing the locating star element included in prior rotary bottling machine, thereby overcoming any costs for changing the size, which, in prior machine, greatly affects the production cost, and is very important for a client in choosing the packaging machine to be achieved or bought.

From the above disclosure it should be apparent that the invention fully achieves the intended aim and objects.

While the invention has been thereinabove disclosed with reference to a preferred embodiment thereof, it should be apparent that the inventive device is susceptible to several modifications and variations, all of which will come within the scope of the invention, as defined in the accompanying claims.

## Claims

1. A rotary device for supporting, clamping and locating multi-size vessels, **characterized in that** said device comprises a first substantially circular star element and a second substantially circular star element, said first and second star elements being essentially equal to one another, each said star element defining a circumferential substantially fretted rim, defining a plurality of adjoining circumferential notches, said first and second star elements being adapted to be axially overlapped onto one another and to be rotatively driven so as to make said notches to perfectly coincide and to offset said notches from said precise coincidence relationship, each pair of said overlapping notches defining a recess adapted to receive and firmly hold therein a respective vessel having a first cross size or width, said device further comprising rotary driving means for mutually intermittently rotatively driving said first and second overlapping star elements to change the size of each said recess for housing and firmly holding therein a said vessel having a second cross size different from said first cross size or width.

2. A device according to claim 1, **characterized in that** each said pair of two overlapping recesses or notches define a holding space adapted to house and firmly hold therein a said vessel, said vessel being substantially contacted at three contact points defined by said recesses of said first and second overlapping star elements.

3. A device according to claims 1 and 2, **characterized in that** each said notch comprises a notch bottom and two notch walls defining a substantially sinusoidal configuration, said three contact points being respectively defined the first by said bottom and the second and third by said walls, each said wall being merged by a ridge merging portion having a substantially circle arch configuration.

4. A device according to claim 1, **characterized in that** said rotary driving means comprise at least an electric brushless servomotor adapted to bidirectionally rotatively turn.

5. A device according to claim 1, **characterized in that** said rotary driving means rotatively intermittently drive said first star element, for example in a clockwise direction and said second star element, in an opposite direction, for example in an anticlockwise direction.

6. A device according to claim 1, **characterized in that** said rotary driving means are directly controlled by a control panel for controlling a bottling machine.

7. A device according to claim 1, **characterized in that** said vessels comprise cylindric vessels.

8. A device according to claim 1, **characterized in that** said vessels comprise oval vessels.

9. A device according to claim 1, **characterized in that** said vessels comprise rectangular vessels.

10. A device according to claim 1, **characterized in that** said first and second star elements are integrally molded of a molding plastics material.

11. A machine for processing vessels, in particular a bottling machine, including at least a rotary device for supporting, clamping and locating said vessels, according to one or more of the preceding claims.
